# EUROPEAN PATENT SPECIFICATION

(11) **EP 4 471 955 B1**
(45) Date of publication and mention of the grant of the patent: **03.06.2026**
(21) Application number: 23769555.6
(22) Date of filing: 28.02.2023
(51) Int. Cl.: H01M 50/24, H01M 50/609, H01M 50/627, H01M 50/186, H01M 50/184, H01M 50/636, H01M 50/645, H01M 50/103, H01M 50/209

(54) **BATTERY CELL, BATTERY, AND ELECTRIC DEVICE**
BATTERIEZELLE, BATTERIE UND ELEKTRISCHE VORRICHTUNG
CELLULE DE BATTERIE, BATTERIE ET DISPOSITIF ÉLECTRIQUE

(30) Priority: 17.03.2022 CN 202220589868 U
(43) Date of publication of application: 04.12.2024
(73) Proprietor: Contemporary Amperex Technology (Hong Kong) Limited, Central, Central And Western District (HK)
(72) Inventor: SHI, Shengyun, Ningde, Fujian 352100 (CN); GUO, Zhijun, Ningde, Fujian 352100 (CN); ZHENG, Yulian, Ningde, Fujian 352100 (CN); XING, Chengyou, Ningde, Fujian 352100 (CN); CHEN, Congsheng, Ningde, Fujian 352100 (CN)
(74) Representative: Kraus & Lederer PartGmbB
(86) International application number: PCT/CN2023/078644
(87) International publication number: WO 2023/174047

(56) References cited:
- CN-A- 107 359 304
- CN-U- 208 674 182
- CN-U- 214 124 072
- CN-U- 214 477 678
- CN-U- 217 158 403
- JP-A- 2000 106 156
- JP-A- 2016 076 346
- JP-A- 2016 154 092
- JP-A- 2016 154 092

## Description

### TECHNICAL FIELD

This application relates to the field of batteries, and in particular, to a battery cell, a battery, and an electric apparatus.

### BACKGROUND

Battery cells are widely used in electronic devices such as mobile phones, notebook computers, electric bicycles, electric vehicles, electric airplanes, electric ships, electric toy cars, electric toy ships, electric toy airplanes, and electric tools. Battery cells may include nickel-cadmium battery cells, nickel-hydrogen battery cells, lithium-ion battery cells, secondary alkaline zinc-manganese battery cells, and the like.

In the development of battery technologies, how the safety of battery cells is enhanced is a research direction in battery technologies.

Documents JP2000106156, JP2016154092, CN208674182 and CN214124072 disclose exemplary battery cells representative of the current state of the art.

### SUMMARY

In view of the foregoing problem, this application provides a battery cell, a battery, and an electric apparatus to enhance the safety of battery cells.

According to a first aspect, this application provides a battery cell, including a housing, an electrode assembly, and a sealing member. The housing is provided with an electrolyte injection hole for injecting an electrolyte. The electrode assembly is accommodated in the housing. The sealing member includes a main body portion, a transition portion surrounding an outer side of the main body portion, and a connecting portion surrounding an outer side of the transition portion. The connecting portion is located on a side of the housing back away from the electrode assembly, at least part of the main body portion protrudes from a first surface of the connecting portion facing the housing and is accommodated in the electrolyte injection hole, and the connecting portion is connected to the housing to seal the electrolyte injection hole. A side of the transition portion facing the housing is provided with an avoidance groove, the avoidance groove is recessed relative to the first surface and surrounds the main body portion, and a groove wall surface of the avoidance groove is connected to the first surface and a surface of the main body portion; and a side of the main body portion back away from the electrolyte injection hole is provided with a recess.

In the above technical solution, the avoidance groove can separate the transition portion from the housing to reduce the risk of contact between the transition portion and the housing, allowing the connecting portion to closely fit with the housing, thereby enhancing the connection strength between the connecting portion and the housing, improving the airtightness. The avoidance groove can reduce the strength of the transition portion, while the recess can reduce the strength of the main body portion, making the transition portion and the main body portion easier to deform. During the process of connecting the housing and the connecting portion, the stress generated is transmitted to the transition portion and the main body portion, which can release the stress through deformation, thereby reducing the concentrated stress at the joint between the connecting portion and the housing, lowering the risk of crack at the joint between the housing and the connecting portion, and improving the airtightness and safety.

In some embodiments, a surface of the transition portion back away from the housing is flush with a surface of the connecting portion back away from the housing to prevent the transition portion from increasing the maximum dimension of the sealing member in the thickness direction, thereby reducing the risk of interference between the sealing member and other components in the battery.

In the invention, a surface of the transition portion back away from the housing protrudes from a surface of the connecting portion back away from the housing.

In the above technical solution, in a case of providing the avoidance groove, the thickness and strength of the transition portion can be ensured to reduce the risk of crack of the transition portion. The transition portion forms an arch structure convex outside and concave in, and the arch structure has good elasticity and can release the stress through deformation when the battery cell is subjected to an external impact, thereby reducing the risk of connection failure between the housing and the connecting portion, and improving the safety.

In the invention, the connecting portion is welded to the housing to form a first welded portion, and the first welded portion surrounds an outer side of the electrolyte injection hole.

In the above technical solution, the first welded portion can separate the electrolyte injection hole from the space outside the sealing member, so as to seal the electrolyte injection hole. The welding process is simple, which can achieve sealing and ensure the connection strength between the connecting portion and the housing.

In the invention, the connecting portion is provided with a thinned region, and the thinned region surrounds an outer side of the first welded portion. The thinned region is used to be welded to the housing to form multiple second welded portions, and the multiple second welded portions are circumferentially spaced apart around the main body portion.

In the above technical solution, during the assembly of the sealing member and the housing, spot welding can be performed in advance on the thinned region to form multiple second welded portions. The multiple second welded portions can pre-fix the sealing member to the housing to reduce the risk of the sealing member shaking during the formation of the first welded portion, ensuring the strength of the first welded portion. This technical solution reduces the power required for spot welding by providing a thinned region on the connecting portion.

In some embodiments, the housing has a second surface abutting against the first surface. The electrolyte injection hole includes a guiding section, a side wall of the guiding section is connected to the second surface; and a pore diameter of the guiding section decreases gradually in a direction leaving the second surface.

In the above technical solution, the guiding section of the electrolyte injection hole includes a conical structure that is large outside and small in, which can guide the main body portion of the sealing member into the electrolyte injection hole during the assembly process, so as to simplify the assembly process.

In some embodiments, the main body portion has a third surface facing the side wall of the guiding section, the third surface is connected to the groove wall surface of the avoidance groove, and the third surface is parallel to an axis of the electrolyte injection hole.

In the above technical solution, the side wall of the guiding section is a conical surface, and the third surface is a cylindrical surface. During the process of inserting the main body portion into the guiding section, the edge of an end of the third surface is used to fit with the side wall of the guiding section, so as to achieve positioning of the sealing member. Compared to a method of achieving positioning through surface-to-surface, this embodiment achieves positioning through edge-to surface fitting, which can reduce the risk of positioning failure caused by surface accuracy.

In some embodiments, the main body portion includes a protrusion and a plate portion, and the protrusion surrounds an outer side of the plate portion and is connected between the plate portion and the transition portion. The protrusion protrudes from the first surface and the plate portion, and at least part of the protrusion is accommodated in the electrolyte injection hole. The recess is disposed at a position of the main body portion corresponding to the protrusion.

In the above technical solution, during the assembly process of the housing and the sealing member, the protrusion can extend into the electrolyte injection hole and fit with the hole wall of the electrolyte injection hole, to achieve positioning of the sealing member, thereby simplifying the assembly process. The protrusion protrudes from the plate portion, and a recess is formed on a side of the protrusion back away from the electrolyte injection hole in the thickness direction, enabling the protrusion to form an inwardly arched structure. The protrusion with this arch structure can release the stress through deformation when the battery cell is subjected to an external impact, thereby reducing the risk of connection failure between the housing and the connecting portion, and improving the safety.

In some embodiments, a center of a surface of the plate portion back away from the housing is provided with a positioning recess.

In the above technical solution, the positioning recess can be used as a positioning reference during the assembly process of the sealing member and the housing to improve connection accuracy.

In some embodiments, the surface of the plate portion back away from the housing is flush with the surface of the connecting portion back away from the housing to improve the flatness of the outer side of the sealing member.

In some embodiments, in a thickness direction of the connecting portion, a size ratio α of the avoidance groove to the transition portion is 0.01-0.5.

In the above technical solution, the smaller the value of α, the shallower the depth of the avoidance groove, and the higher the risk of contact between the transition portion and the housing. The larger the value of α, the greater the limitation on the size of the transition portion. If the value of α is too large, the thickness of the transition portion is relatively small, which is likely to cause a crack when the battery cell is subjected to an external impact. In this embodiment of this application, the value of α is limited to 0.01-0.5 to ensure the strength of the transition portion while enabling the avoidance groove to separate the transition portion and the housing.

According to a second aspect, some embodiments of this application provide a battery including multiple battery cells according to any one of the implementations of the first aspect.

According to a third aspect, some embodiments of this application provide an electric apparatus including the battery cell according to any one of the implementations of the first aspect, where the battery cell is configured to supply electric energy.

The foregoing description is merely an overview of the technical solution of this application. For a better understanding of the technical means in this application such that they can be implemented according to the content of the specification, and to make the above and other objectives, features, and advantages of this application more obvious and easier to understand, the following describes specific embodiments of this application.

### BRIEF DESCRIPTION OF DRAWINGS

To describe the technical solutions in the embodiments of this application more clearly, the following briefly describes the accompanying drawings required for describing the embodiments of this application.
FIG. 1 is a schematic structural diagram of a vehicle according to some embodiments of this application;
FIG. 2 is a schematic exploded view of a battery according to some embodiments of this application;
FIG. 3 is a schematic exploded view of a battery module shown in FIG. 2;
FIG. 4 is a schematic cross-sectional view of a battery cell according to some embodiments of this application;
FIG. 5 is an enlarged schematic diagram at circle A of the battery cell in FIG. 4;
FIG. 6 is a schematic cross-sectional view of a sealing member of a battery cell according to some embodiments of this application;
FIG. 7 is a partial schematic top view of a battery cell according to some embodiments of this application;
FIG. 8 is a partial schematic cross-sectional view of an end cover of a battery cell according to some embodiments of this application;
FIG. 9 is an enlarged schematic diagram at circle B in FIG. 5; and
FIG. 10 is a schematic cross-sectional view of a sealing member of a battery cell according to some embodiments of this application.

Reference signs in the specific embodiments are described as follows:
1. vehicle; 2. battery; 3. controller; 4. motor;
5. box; 5a. first box portion; 5b. second box portion; 5c. accommodating space;
6. battery module; 7. battery cell;
10. electrode assembly;
20. housing; 21. electrolyte injection hole; 211. guiding section; 211a. side wall; 212. installation section; 22. shell; 23. end cover; 24. second surface;
30. sealing member; 31. main body portion; 311. protrusion; 31a. third surface; 312. plate portion; 312a. positioning recess; 32. transition portion; 33. connecting portion; 331. thinned region; 33a. first surface; 34. avoidance groove; 34a. groove wall surface; 35. recess;
40. electrode terminal; 50. sealing pin;
W1. first welded portion; W2. second welded portion; and Z. thickness direction.

### DESCRIPTION OF EMBODIMENTS

To make the objectives, technical solutions, and advantages of the embodiments of this application clearer, the following clearly describes the technical solutions in the embodiments of this application with reference to the accompanying drawings in the embodiments of this application. Apparently, the described embodiments are some but not all of the embodiments of this application.

Unless otherwise defined, all technical and scientific terms used in this application shall have the same meanings as commonly understood by persons skilled in the art to which this application relates. The terms used in the specification of this application are intended to merely describe the specific embodiments rather than to limit this application. The terms "include", "comprise", and any variations thereof in the specification, claims, and brief description of drawings of this application are intended to cover non-exclusive inclusions. In the specification, claims, or accompanying drawings of this application, the terms "first", "second", and the like are intended to distinguish between different objects rather than to describe a particular order or a primary-secondary relationship.

Reference to "embodiment" in this application means that specific features, structures, or characteristics described with reference to the embodiment may be included in at least one embodiment of this application. The word "embodiment" appearing in various places in this specification does not necessarily refer to the same embodiment or an independent or alternative embodiment that is exclusive of other embodiments.

In the description of this application, it should be noted that unless otherwise specified and defined explicitly, the terms "mount", "connect", "join", and "attach" should be understood in their general senses. For example, they may refer to a fixed connection, a detachable connection, or an integral connection; and a direct connection, an indirect connection via an intermediate medium, or an internal communication between two elements. Persons of ordinary skill in the art can understand specific meanings of these terms in this application as appropriate to specific situations.

The term "and/or" in this application is only an associative relationship for describing associated objects, indicating that three relationships may be present. For example, A and/or B may indicate the following three cases: presence of only A; presence of both A and B; and presence of only B. In addition, the character "/" in this application generally indicates an "or" relationship between the contextually associated objects.

In the embodiments of this application, the same reference signs denote the same components. For brevity, in different embodiments, detailed descriptions of the same components are not repeated. It should be understood that as shown in the accompanying drawings, sizes such as thickness, length, and width of various components and sizes such as thickness, length, and width of integrated devices in the embodiments of this application are merely for illustrative purposes and should not constitute any limitations on this application.

In this application, "multiple" means more than two (inclusive).

In this application, a battery cell may include a lithium-ion secondary battery cell, a lithium-ion primary battery cell, a lithium-sulfur battery cell, a sodium-lithium-ion battery cell, a sodium-ion battery cell, a magnesium-ion battery cell, or the like. This is not limited in the embodiments of this application. The battery cell may be cylindrical, flat, cuboid, or of other shapes. This is not limited in the embodiments of this application either.

The battery mentioned in the embodiments of this application is a single physical module that includes one or more battery cells for providing a higher voltage and capacity. For example, the battery mentioned in this application may include a battery module, a battery pack, or the like. A battery typically includes a box configured to enclose one or more battery cells. The box can prevent liquids or other foreign matter from affecting charging or discharging of the battery cell.

The battery cell includes an electrode assembly and an electrolyte. The electrode assembly includes a positive electrode plate, a negative electrode plate, and a separator. The battery cell mainly relies on migration of metal ions between the positive electrode plate and the negative electrode plate to work. The positive electrode plate includes a positive electrode current collector and a positive electrode active substance layer. The positive electrode active substance layer is applied on a surface of the positive electrode current collector. The positive electrode current collector includes a positive electrode coated region and a positive tab connected to the positive electrode coated region. The positive electrode coated region is coated with the positive electrode active substance layer, and the positive tab is coated with no positive electrode active substance layer. A lithium-ion battery cell is used as an example, for which, the positive electrode current collector may be made of aluminum, the positive electrode active substance layer includes a positive electrode active substance, and the positive electrode active substance may be lithium cobalt oxide, lithium iron phosphate, ternary lithium, lithium manganate oxide, or the like. The negative electrode plate includes a negative electrode current collector and a negative electrode active substance layer. The negative electrode active substance layer is applied on a surface of the negative electrode current collector. The negative electrode current collector includes a negative electrode coated region and a negative tab connected to the negative electrode coated region. The negative electrode coated region is coated with the negative electrode active substance layer, and the negative tab is coated with no negative electrode active substance layer. The negative electrode current collector may be made of copper, the negative electrode active substance layer includes a negative electrode active substance, and the negative electrode active substance may be carbon, silicon, or the like. The separator may be made of PP (polypropylene, polypropylene), PE (polyethylene, polyethylene), or the like.

The battery cell further includes a housing, and an accommodating cavity is formed in the housing for accommodating the electrode assembly. The housing can protect the electrode assembly from the outside to prevent external foreign matters from affecting charging or discharging of the electrode assembly.

The housing is typically provided with an electrolyte injection hole via which the internal space and the external space of the housing communicate with each other. During the production process of the battery cell, the electrolyte injection equipment injects the electrolyte into the housing through the electrolyte injection hole. When the processes related to the electrolyte injection hole are completed, the electrolyte injection hole needs to be sealed to ensure a negative pressure environment in the housing and reduce the risk of an external gas and moisture entering the housing.

In the related art, a sealing member is mounted on the housing, and the sealing member is connected to the housing and covers the electrolyte injection hole to seal the electrolyte injection hole. To facilitate the positioning of the sealing member, the inventors have improved the structure of the sealing member. Specifically, the sealing member includes a main body portion and a connecting portion surrounding an outer side of the main body portion. At least part of the main body portion protrudes from the surface of the connecting portion facing the housing and is inserted into the electrolyte injection hole. The connecting portion can be used to connect with the housing so as to seal the electrolyte injection hole. The main body portion can be inserted into the electrolyte injection hole, so as to position the sealing member during the assembly process of the sealing member, thus simplifying the installation process of the sealing member.

However, the inventors found that due to process reasons, the joint between the main body portion and the connecting portion forms a structure similar to a rounded corner, and the surface of the rounded corner is inclined relative to the surface of the connecting portion facing the housing. During the assembly process of the sealing member, the surface of the rounded corner may press against the housing, causing a gap between the connecting portion and the housing, affecting the connection strength between the connecting portion and the housing, and increasing the risk of sealing failure. When the housing is connected to the connecting portion, stress is generated and concentrated at the joint between the housing and the connecting portion, increasing the risk of crack at the joint between the housing and the connecting portion, leading to safety hazards such as a sealing failure or electrolyte leakage.

In view of this, an embodiment of this application provides a battery cell, which includes a housing, an electrode assembly, and a sealing member. The housing is provided with an electrolyte injection hole for injecting an electrolyte. The electrode assembly is accommodated in the housing. The sealing member includes a main body portion, a transition portion surrounding an outer side of the main body portion, and a connecting portion surrounding an outer side of the transition portion. The connecting portion is located on a side of the housing back away from the electrode assembly, at least part of the main body portion protrudes from a first surface of the connecting portion facing the housing and is accommodated in the electrolyte injection hole, and the connecting portion is connected to the housing to seal the electrolyte injection hole. A side of the transition portion facing the housing is provided with an avoidance groove, the avoidance groove is recessed relative to the first surface and surrounds the main body portion, and a groove wall surface of the avoidance groove is connected to the first surface and a surface of the main body portion; and a side of the main body portion back away from the electrolyte injection hole is provided with a recess.

In the battery cell of this embodiment, the avoidance groove can separate the transition portion from the housing, reducing the risk of contact between the transition portion and the housing, allowing the connecting portion to fit closely with the housing, enhancing the connection strength between the connecting portion and the housing, and improving the airtightness. The avoidance groove can reduce the strength of the transition portion, while the recess can reduce the strength of the main body portion, making the transition portion and the main body portion easier to deform. During the process of connecting the housing and the connecting portion, the stress generated is transmitted to the transition portion and the main body portion, which can release the stress through deformation, thereby reducing the concentrated stress at the joint between the connecting portion and the housing, lowering the risk of crack at the joint between the housing and the connecting portion, and improving the airtightness and safety.

The battery cell described in the embodiments of this application is applicable to a battery and an electric apparatus using the battery cell.

The electric apparatus may be a vehicle, a mobile phone, a portable device, a notebook computer, a ship, a spacecraft, an electric toy, an electric tool, or the like. The vehicle may be a fossil fuel vehicle, a natural gas vehicle, or a new energy vehicle. The new energy vehicle may be a battery electric vehicle, a hybrid electric vehicle, a range-extended electric vehicle, or the like. The spacecraft includes an airplane, a rocket, a space shuttle, a spaceship, and the like. The electric toy includes a fixed or mobile electric toy, for example, a game console, an electric toy car, an electric toy ship, and an electric toy airplane. The electric tool includes an electric metal cutting tool, an electric grinding tool, an electric assembly tool, and an electric railway-specific tool, for example, an electric drill, an electric grinder, an electric wrench, an electric screwdriver, an electric hammer, an electric impact drill, a concrete vibrator, and an electric planer. The embodiments of this application impose no special limitation on the foregoing electric apparatus.

For ease of description, the electric apparatus being a vehicle is used as an example for description of the following embodiments.

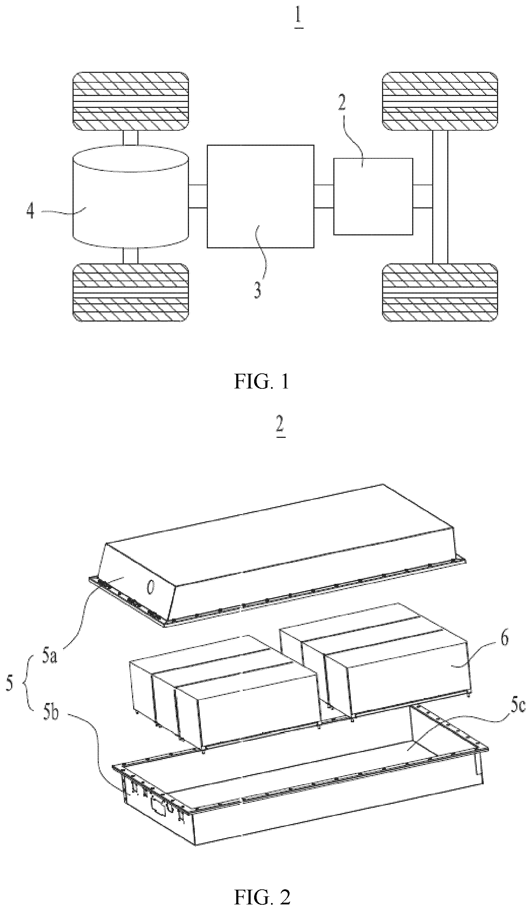

FIG. 1 is a schematic structural diagram of a vehicle according to some embodiments of this application.

As shown in FIG. 1, the vehicle 1 is provided with a battery 2 in, and the battery 2 may be disposed at the bottom or in the front or at the rear of the vehicle 1. The battery 2 may be configured to supply power to the vehicle 1. For example, the battery 2 may be used as an operational power source for the vehicle 1.

The vehicle 1 may further include a controller 3 and a motor 4, and the controller 3 is configured to control the battery 2 to supply power to the motor 4, for example, to satisfy a working electricity need during start, navigation, and driving of the vehicle 1.

In some embodiments of this application, the battery 2 can be used as not only the operational power supply for the vehicle 1 but also a driving power supply for the vehicle 1, replacing all or a part of the fossil fuel or the natural gas to provide driving power for the vehicle 1.

FIG. 2 is a schematic exploded view of a battery according to some embodiments of this application.

As shown in FIG. 2, the battery 2 includes a box 5 and a battery cell (not shown), and the battery cell is accommodated in the box 5.

The box 5 is configured to accommodate the battery cell, and the box 5 may have various structures. In some embodiments, the box 5 may include a first box portion 5a and a second box portion 5b. The first box portion 5a and the second box portion 5b fit together to jointly define an accommodating space 5c for accommodating the battery cell. The second box portion 5b may be a hollow structure with an opening formed at an end, the first box portion 5a is a plate-shaped structure, and the first box portion 5a covers the opening side of the second box portion 5b so as to form the box 5 having the accommodating space 5c; and the first box body portion 5a and the second box portion 5b may alternatively both be a hollow structure with an opening formed at an end, and the opening side of the first box portion 5a is engaged with the opening side of the second box portion 5b so as to form the box 5 having the accommodating space 5c. Certainly, the first box portion 5a and the second box portion 5b may be in various shapes, such as cylinder and cuboid.

In order to improve the airtightness after the connection of the first box portion 5a and the second box portion 5b, a sealing member such as sealing gum and sealing ring may also be disposed between the first box portion 5a and the second box portion 5b.

Assuming that the first box portion 5a fits on a top of the second box portion 5b, the first box portion 5a may also be referred to as an upper cover, and the second box portion 5b may also be referred to as a lower box.

There may be one or more battery cells in the battery 2. Under the condition that multiple battery cells are provided, the multiple battery cells may be connected in series, parallel, or series-parallel, where being connected in series-parallel means a combination of series and parallel connections of the multiple battery cells. The plurality of battery cells may be directly connected in series, parallel, or series-parallel, and then an entirety of the multiple battery cells is accommodated in the box 5; or certainly, the battery may be formed by multiple battery cells being connected in series, parallel, or series-parallel first to form a battery module 6 and then multiple battery modules 6 being connected in series, parallel, or series-parallel to form an entirety, which is accommodated in the box 5.

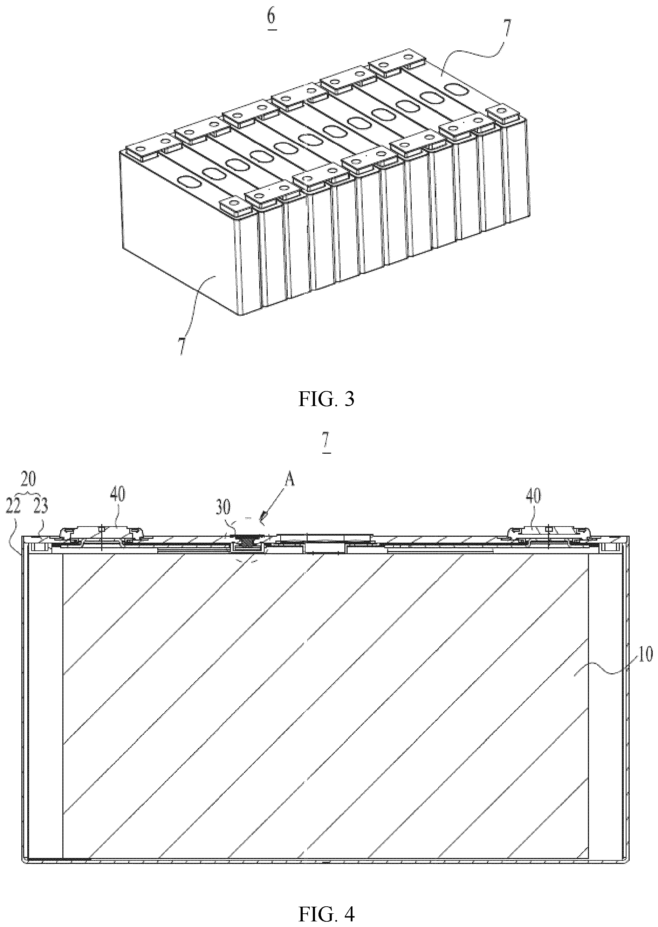

FIG. 3 is a schematic exploded view of a battery module shown in FIG. 2.

In some embodiments, as shown in FIG. 3, there are multiple battery cells 7, and the multiple battery cells 7 are connected in series, parallel, or series-parallel to form a battery module 6. A plurality of battery modules 6 are then connected in series, parallel, or series-parallel to form an entirety which is accommodated in the box.

The plurality of battery cells 7 in the battery module 6 can be electrically connected via a busbar, so that the multiple battery cells 7 in the battery module 6 are connected in series, parallel, or series-parallel.

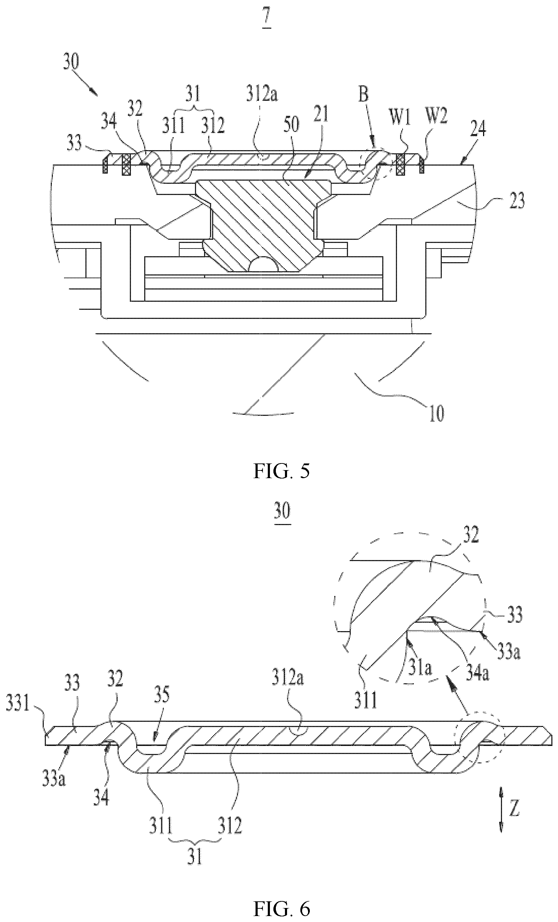

FIG. 4 is a schematic cross-sectional view of a battery cell according to some embodiments of this application; FIG. 5 is an enlarged schematic diagram at circle A of the battery cell in FIG. 4; and FIG. 6 is a schematic cross-sectional view of a sealing member of a battery cell according to some embodiments of this application.

As shown in FIGs. 4 to 6, the battery cell 7 of the embodiments of this application includes an electrode assembly 10, a housing 20, and a sealing member 30. The housing 20 is provided with an electrolyte injection hole 21 for injecting an electrolyte. The electrode assembly 10 is accommodated in the housing 20. The sealing member 30 includes a main body portion 31, a transition portion 32 surrounding an outer side of the main body portion 31, and a connecting portion 33 surrounding an outer side of the transition portion 32. The connecting portion 33 is located on a side of the housing 20 back away from the electrode assembly 10. At least part of the main body portion 31 protrudes from a first surface 33a of the connecting portion 33 facing the housing 20 and is accommodated in the electrolyte injection hole 21, and the connecting portion 33 is connected to the housing 20 to seal the electrolyte injection hole 21. A side of the transition portion 32 facing the housing 20 is provided with an avoidance groove 34, the avoidance groove 34 is recessed relative to the first surface 33a and surrounds the main body portion 31, and a groove wall surface 34a of the avoidance groove 34 is connected to the first surface 33a and a surface of the main body portion 31. A side of the main body portion 31 back away from the electrolyte injection hole 21 is provided with a recess 35.

The electrode assembly 10 is a core component enabling the battery cell 7 to perform charge and discharge functions, including a positive electrode plate, a negative electrode plate, and a separator. The positive electrode plate and negative electrode plate have opposite polarities, and the separator is used to insulate and separate the positive electrode plate and negative electrode plate. Working of the electrode assembly 10 mainly relies on migration of metal ions between the positive electrode plate and the negative electrode plate.

One or multiple electrode assemblies 10 may be provided. When there are multiple electrode assemblies 10, they may be stacked.

The housing 20 is a hollow structure, and an accommodating cavity is formed in it for accommodating the electrode assembly 10 and an electrolyte. The housing 20 may be of various shapes, such as cylinder or cuboid. The shape of the housing 20 may be determined based on a specific shape of the electrode assembly 10. For example, under the condition that the electrode assembly 10 is a cylindrical structure, a cylindrical housing may be selected; and under the condition that the electrode assembly 10 is a cuboid structure, a cuboid housing may be selected.

The electrolyte injection hole 21 enables communication between the internal space and the external space of the housing 20. During the production process of the battery cell 7, the electrolyte injection equipment can inject the electrolyte into the housing 20 through the electrolyte injection hole 21.

The sealing member 30 is configured to cover the electrolyte injection hole 21 from the outside to seal the electrolyte injection hole 21, ensure a negative pressure environment in the housing 20, and reduce the risk of an external gas and moisture entering the housing 20.

The connecting portion 33 has a first surface 33a facing the housing 20, the first surface 33a being used for abutting against the housing 20. The joint between the connecting portion 33 and the housing 20 isolates the electrolyte injection hole 21 from the space outside the sealing member 30, so as to seal the electrolyte injection hole 21. The connecting portion 33 may be connected to the housing 20 by welding or other means.

The transition portion 32 is connected between the main body portion 31 and the connecting portion 33. The thickness of the transition portion 32 may be greater than, less than, or equal to the thickness of the connecting portion 33.

The main body portion 31 may entirely protrude from the first surface 33a, or only partially protrude from the first surface 33a, which is not limited in this embodiment.

The sealing member 30 is provided, at a position corresponding to the transition portion 32, with an avoidance groove 34 recessed relative to the first surface 33a. The avoidance groove 34 is an annular groove surrounding the main body portion 31 and adjacent thereto. A groove wall surface 34a of the avoidance groove 34 may be directly connected to the first surface 33a or indirectly connected to the first surface 33a via another surface. The groove wall surface 34a of the avoidance groove 34 is connected to a surface on an inner side of the main body portion 31. The recess 35 is recessed relative to the surface of the main body portion 31 back away from the electrolyte injection hole in the direction near the electrolyte injection hole 21.

In this embodiment, the avoidance groove 34 can separate the transition portion 32 from the housing 20 to reduce the risk of contact between the transition portion 32 and the housing 20, allowing the connecting portion 33 to closely fit with the housing 20, thereby enhancing the connection strength between the connecting portion 33 and the housing 20, improving the airtightness. The avoidance groove 34 can reduce the strength of the transition portion 32, while the recess 35 can reduce the strength of the main body portion 31, making the transition portion 32 and the main body portion 31 easier to deform. During the process of connecting the housing 20 and the connecting portion 33, the stress generated is transmitted to the transition portion 32 and the main body portion 31, which can release the stress through deformation, thereby reducing the concentrated stress at the joint between the connecting portion 33 and the housing 20, lowering the risk of crack at the connection between the housing 20 and the connecting portion 33, and improving the airtightness and safety.

In some embodiments, the housing 20 includes a shell 22 and an end cover 23, where the shell 22 has an opening, and the end cover 23 covers the opening.

The shell 22 may be a structure with an opening at one side, and the end cover 23 is designed to cover the opening of the shell 22. Alternatively, the shell 22 may be a structure with openings at two sides, and the end cover 23 is provided in two, where the two end covers 23 cover the two openings of the shell 22 respectively.

For example, the end cover 23 is connected to the shell 22 through welding, adhesion, snap-fitting, or in another manner.

The electrolyte injection hole 21 may be provided on the end cover 23 or on the shell 22. For example, the electrolyte injection hole 21 is provided on the end cover 23.

In some embodiments, the battery cell 7 may also include two electrode terminals 40 and the two electrode terminals 40 may be disposed on the end cover 23. The two electrode terminals 40 are a positive electrode terminal and a negative electrode terminal respectively. The positive electrode terminal is configured to electrically connect with the positive electrode plate of the electrode assembly 10, and the negative electrode terminal is configured to connect with the negative electrode plate, so as to lead out the electrical energy generated by the electrode assembly 10 to the outside of the housing 20.

In some embodiments, in a thickness direction Z of the connecting portion 33, a size ratio α of the avoidance groove 34 to the transition portion 32 is 0.01-0.5.

A size of the avoidance groove 34 in the thickness direction Z is the depth of the avoidance groove 34.

The smaller the value of α, the shallower the depth of the avoidance groove 34, and the higher the risk of contact between the transition portion 32 and the housing 20. The larger the value of α, the greater the limitation on the size of the transition portion 32. If the value of α is too large, the thickness of the transition portion 32 is relatively small, which is likely to cause a crack when the battery cell 7 is subjected to an external impact. In this embodiment of this application, the value of α is limited to 0.01-0.5 to ensure the strength of the transition portion 32 while enabling the avoidance groove 34 to separate the transition portion 32 and the housing 20.

In some embodiments, the depth of the avoidance groove 34 in the thickness direction Z is 0.05 mm-0.5 mm. A size of the connecting portion 33 in the thickness direction Z is 0.1 mm-5 mm. The size of the transition portion 32 in the thickness direction Z is less than or equal to the size of the connecting portion 33 in the thickness direction Z.

In the invention, the connecting portion 33 is welded to the housing 20 to form a first welded portion W1, and the first welded portion W1 surrounds an outer side of the electrolyte injection hole 21.

In this embodiment, the first welded portion W1 can separate the electrolyte injection hole 21 from the space outside the sealing member 30, so as to seal the electrolyte injection hole 21. The welding process is simple, which can achieve sealing and ensure the connection strength between the connecting portion 33 and the housing 20.

In the invention, a surface of the transition portion 32 back away from the housing 20 protrudes from a surface of the connecting portion 33 back away from the housing 20.

This embodiment, in a case of providing the avoidance groove 34, can ensure the thickness and strength of the transition portion 32, to reduce the risk of crack of the transition portion 32. The transition portion 32 forms an arch structure convex outside and concave in, and the arch structure has good elasticity and can release the stress through deformation when the battery cell 7 is subjected to an external impact, thereby reducing the risk of connection failure between the housing 20 and the connecting portion 33, and improving the safety.

During the process of welding the connecting portion 33 to the housing 20, the generated heat and welding stress are conducted to the sealing member 30, causing the sealing member 30 to swell and deform to a certain extent due to heating. After the welding, the sealing member 30 gradually cools and begins to shrink, resulting in stress concentration on the first welded portion W1 and increasing the risk of tearing the first welded portion W1. The transition portion 32 with an arch structure in this embodiment can effectively release the welding stress through deformation, reducing the stress on the first welded portion W1, lowering the risk of tearing the first welded portion W1, and improving the airtightness and safety.

In some embodiments, the main body portion 31 includes a protrusion 311 and a plate portion 312, and the protrusion 311 surrounds an outer side of the plate portion 312 and is connected between the plate portion 312 and the transition portion 32. The protrusion 311 protrudes from the first surface 33a and the plate portion 312, and at least part of the protrusion 311 is accommodated in the electrolyte injection hole 21. The recess 35 is disposed at a position of the main body portion 31 corresponding to the protrusion 311.

In this embodiment, during the assembly process of the housing 20 and the sealing member 30, the protrusion 311 can extend into the electrolyte injection hole 21 and fit with the hole wall of the electrolyte injection hole 21, to achieve positioning of the sealing member 30, thereby simplifying the assembly process. The protrusion 311 protrudes from the plate portion 312, and a recess 35 is formed on a side of the protrusion 311 back away from the electrolyte injection hole 21 in the thickness direction Z, enabling the protrusion 311 to form an inwardly arched structure. The protrusion 311 with this arch structure can release the stress through deformation when the battery cell 7 is subjected to an external impact, thereby reducing the risk of connection failure between the housing 20 and the connecting portion 33, and improving the safety.

The protrusion 311 with an arch structure can effectively release the welding stress through deformation, reducing the stress on the first welded portion W1, lowering the risk of tearing the first welded portion W1, and improving the airtightness and safety.

In some embodiments, a center of a surface of the plate portion 312 back away from the housing 20 is provided with a positioning recess 312a.

In this embodiment, the positioning recess 312a can be used as a positioning reference during the assembly process of the sealing member 30 and the housing 20 to improve connection accuracy.

For example, after detecting the positioning recess 312a, a welding device, with the positioning recess 312a as a reference, surrounds the positioning recess 312a in a circle, to weld the connecting portion 33 to the shell 22 and form an annular first welded portion W1.

In some embodiments, a surface of the plate portion 312 back away from the housing 20 is flush with a surface of the connecting portion 33 back away from the housing 20. This embodiment can improve the flatness of the outer side of the sealing member 30.

In some embodiments, the sealing member 30 is made by extruding a flat plate. The sealing member 30 forms the avoidance groove 34 and the recess 35 at the extruded position.

In some embodiments, the battery cell 7 further includes a sealing pin 50, the sealing pin 50 being inserted into the electrolyte injection hole 21 to seal the electrolyte injection hole 21. In the thickness direction Z, the sealing pin 50 is spaced apart from the sealing member 30 to reduce the risk of the sealing pin 50 interfering with the sealing member 30.

The sealing pin 50 is connected to the housing 20 in a detachable manner. After the battery cell 7 is subjected to a single electrolyte injection, the sealing pin 50 is used to preliminarily seal the electrolyte injection hole 21. After undergoing the formation process, the battery cell 7 needs to be subjected to a secondary electrolyte injection. In this case, the sealing pin 50 can be pulled out for another electrolyte injection.

The sealing pin 50 can provide a temporary sealing function during production of the battery cell 7. After the processes related to the electrolyte injection hole 21 are completed, the sealing member 30 is welded to achieve final sealing of the electrolyte injection hole 21.

In some embodiments, the material of the sealing pin 50 is plastic.

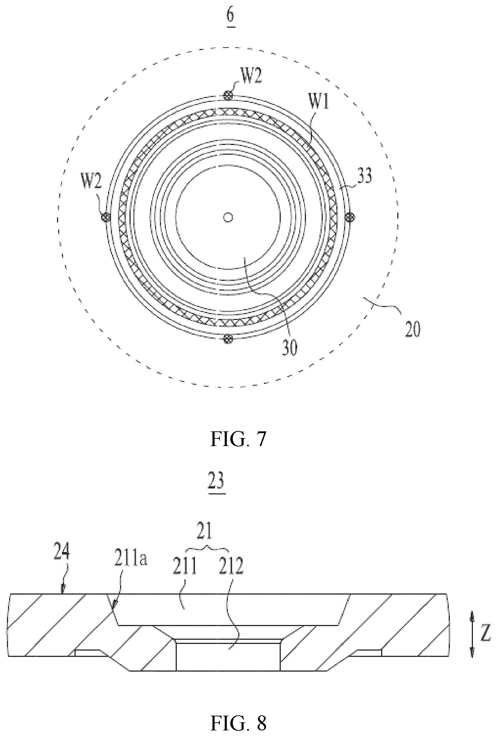

FIG. 7 is a partial schematic top view of a battery cell according to some embodiments of this application;

Refer to FIGs. 5 to 7. In some embodiments, the first welded portion W1 is an annular structure surrounding the outside of the electrolyte injection hole 21.

In the invention, the connecting portion 33 is provided with a thinned region 331, and the thinned region 331 surrounds an outer side of the first welded portion W1. The thinned region 331 is used to be welded to the housing 20 to form multiple second welded portions W2, and the multiple second welded portions W2 are circumferentially spaced apart around the main body portion 31.

The thickness of the thinned region 331 is less than the thickness of other regions of the connecting portion 33. The thinned region 331 may be located at an end of the connecting portion 33 or in the middle of the connecting portion 33, which is not limited in this embodiment.

During the assembly of the sealing member 30 and the housing 20, spot welding can be performed in advance on the thinned region 331 to form multiple second welded portions W2. The multiple second welded portions W2 can pre-fix the sealing member 30 to the housing 20 to reduce the risk of the sealing member 30 shaking during the formation of the first welded portion W1, ensuring the strength of the first welded portion W1. This embodiment reduces the power required for spot welding by providing a thinned region 331 on the connecting portion 33.

In some embodiments, the thinned region 331 is located at an end of the connecting portion 33 away from the main body portion 31. Optionally, in this embodiment, the thinned region 331 is formed by providing a chamfer at an end of the connecting portion 33.

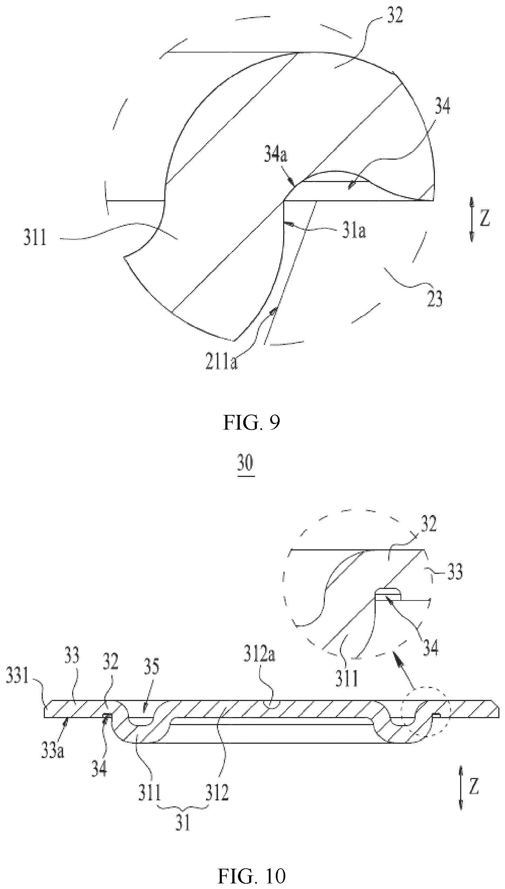

FIG. 8 is a partial schematic cross-sectional view of an end cover of a battery cell according to some other embodiments of this application; and FIG. 9 is an enlarged schematic diagram at circle B in FIG. 5.

As shown in FIGs. 8 and 9, in some embodiments, the housing 20 has a second surface 24 abutting against the first surface 33a. The electrolyte injection hole 21 includes a guiding section 211, and a side wall 211a of the guiding section 211 is connected to the second surface 24. A pore diameter of the guiding section 211 decreases gradually in a direction leaving the second surface 24.

At least part of the main body portion 31 is accommodated in the guiding section 211. For example, at least part of the protrusion 311 is accommodated in the guiding section 211.

In this embodiment, the guiding section 211 of the electrolyte injection hole 21 includes a conical structure that is large outside and small in, which can guide the main body portion 31 of the sealing member 30 into the electrolyte injection hole 21 during the assembly process, so as to simplify the assembly process.

In some embodiments, the main body portion 31 has a third surface 31a facing the side wall 211a of the guiding section 211, the third surface 31a is connected to the groove wall surface 34a of the avoidance groove 34, and the third surface 31a is parallel to an axis of the electrolyte injection hole 21.

For example, the axis is parallel to a thickness direction Z of the connecting portion 33.

In this embodiment, the side wall 211a of the guiding section 211 is a conical surface, and the third surface 31a is a cylindrical surface. During the process of inserting the main body portion 31 into the guiding section 211, the edge of an end of the third surface 31a is used to fit with the side wall 211a of the guiding section 211, so as to achieve positioning of the sealing member 30. Compared to a method of achieving positioning through surface-to-surface, this embodiment achieves positioning through edge-to surface fitting, which can reduce the risk of positioning failure caused by surface accuracy.

In some embodiments, the third surface 31a is a cylindrical surface, and the side wall 211a of the guiding section 211 is a conical surface.

In some embodiments, the electrolyte injection hole 21 further includes an installation section 212, the installation section 212 being provided in the guiding section 211. For example, the sealing pin is inserted into the installation section 212.

FIG. 10 is a schematic cross-sectional view of a sealing member of a battery cell according to some embodiments of this application.

As shown in FIG. 10, in some embodiments, a surface of the transition portion 32 back away from the housing 20 is flush with a surface of the connecting portion 33 back away from the housing 20. This embodiment can prevent the transition portion 32 from increasing the maximum dimension of the sealing member 30 in the thickness direction Z, thereby reducing the risk of interference between the sealing member 30 and other components in the battery.

According to some embodiments of this application, this application further provides a battery including multiple battery cells 7 according to any one of the foregoing embodiments.

According to some embodiments of this application, this application further provides an electric apparatus including the battery cell 7 according to any one of the foregoing embodiments, where the battery cell 7 is configured to supply electric energy to the electric apparatus.

The electric apparatus may be any one of the foregoing devices or systems using a battery cell 7.

With reference to FIGs. 4 to 6, this application provides a battery cell 7, including an electrode assembly 10, a housing 20, and a sealing member 30. The housing 20 includes a shell 22 and an end cover 23, where the shell 22 has an opening, and the end cover 23 covers the opening. The end cover 23 is provided with an electrolyte injection hole 21 for injecting an electrolyte. The electrode assembly 10 is accommodated in the housing 20.

The sealing member 30 includes a main body portion 31, a transition portion 32 surrounding an outer side of the main body portion 31, and a connecting portion 33 surrounding an outer side of the transition portion 32. The connecting portion 33 is located on a side of the housing 20 back away from the electrode assembly 10. The main body portion 31 includes a protrusion 311 and a plate portion 312, and the protrusion 311 surrounds an outer side of the plate portion 312 and is connected between the plate portion 312 and the transition portion 32. The protrusion 311 protrudes from the first surface 33a of the connecting portion 33 facing the housing 20 and the plate portion 312, and at least part of the protrusion 311 is accommodated in the electrolyte injection hole 21. The connecting portion 33 is welded to the end cover 23 to form a first welded portion W1 to seal the electrolyte injection hole 21.

A side of the transition portion 32 facing the housing 20 is provided with an avoidance groove 34, the avoidance groove 34 is recessed relative to the first surface 33a and surrounds the main body portion 31, and a groove wall surface 34a of the avoidance groove 34 is connected to the first surface 33a and a surface of the main body portion 31. The main body portion 31 forms a recess 35 at a position corresponding to the protrusion 311, and the recess 35 is recessed relative to the surface of the connecting portion 33 back away from the housing 20.

In conclusion, it should be noted that the foregoing embodiments are merely intended for describing the technical solutions of this application, but not for limiting this application. Although this application is described in detail with reference to the foregoing embodiments, persons of ordinary skill in the art should understand that they may still make modifications to the technical solutions described in the foregoing embodiments or make equivalent replacements to some technical features thereof, without departing from the scope of the invention, as defined in the appended claims.

## Claims

1. A battery cell (7), comprising:
a housing (20) provided with an electrolyte injection hole (21) for injecting an electrolyte;
an electrode assembly (10) accommodated in the housing (20); and
a sealing member (30) comprising a main body portion (31), a transition portion (32) surrounding an outer side of the main body portion (31), and a connecting portion (33) surrounding an outer side of the transition portion (32), wherein the connecting portion (33) is located on a side of the housing (20) back away from the electrode assembly (10), at least part of the main body portion (31) protrudes from a first surface (33a) of the connecting portion (33) facing the housing (20) and is accommodated in the electrolyte injection hole (21), and the connecting portion (33) is connected to the housing (20) to seal the electrolyte injection hole (21); wherein
a side of the transition portion (32) facing the housing (20) is provided with an avoidance groove (34), the avoidance groove (34) is recessed relative to the first surface (33a) and surrounds the main body portion (31), and a groove wall surface (34a) of the avoidance groove (34) is connected to the first surface (33a) and a surface of the main body portion (31); and a side of the main body portion (31) back away from the electrolyte injection hole (21) is provided with a recess (35),
wherein a surface of the transition portion (32) back away from the housing (20) protrudes from a surface of the connecting portion (33) back away from the housing (20);
wherein the connecting portion (33) is welded to the housing (20) to form a first welded portion (W1), and the first welded portion (W1) surrounds an outer side of the electrolyte injection hole (21);
wherein the connecting portion (33) is provided with a thinned region (331), and the thinned region (331) surrounds an outer side of the first welded portion (W1); and
the thinned region (331) is used to be welded to the housing (20) to form multiple second welded portions (W2), and the multiple second welded portions (W2) are circumferentially spaced apart around the main body portion (31).

2. The battery cell (7) according to claim 1, wherein the housing (20) has a second surface (24) abutting against the first surface (33a); and
the electrolyte injection hole (21) comprises a guiding section (211), a side wall (211a) of the guiding section (211) is connected to the second surface (24); and a pore diameter of the guiding section (211) decreases gradually in a direction leaving the second surface (24).

3. The battery cell (7) according to claim 2, wherein the main body portion (31) has a third surface (31a) facing the side wall (211a) of the guiding section (211), the third surface (31a) is connected to the groove wall surface (34a) of the avoidance groove (34), and the third surface (31a) is parallel to an axis of the electrolyte injection hole (21).

4. The battery cell (7) according to claim 1, wherein the main body portion (31) comprises a protrusion (311) and a plate portion (312), and the protrusion (311) surrounds an outer side of the plate portion (312) and is connected between the plate portion (312) and the transition portion (32);
the protrusion (311) protrudes from the first surface (33a) and the plate portion (312), and at least part of the protrusion (311) is accommodated in the electrolyte injection hole (21); and
the recess (35) is disposed at a position of the main body portion (31) corresponding to the protrusion (311).

5. The battery cell (7) according to claim 4, wherein a center of a surface of the plate portion (312) back away from the housing (20) is provided with a positioning recess (312a).

6. The battery cell (7) according to claim 4, wherein a surface of the plate portion (312) back away from the housing (20) is flush with a surface of the connecting portion (33) back away from the housing (20).

7. The battery cell (7) according to claim 1, wherein in a thickness direction (Z) of the connecting portion (33), a size ratio of the avoidance groove (34) to the transition portion (32) is 0.01-0.5.

8. A battery (2), comprising the battery cell (7) according to any one of claims 1 to 7.

9. An electric apparatus, comprising the battery cell (7) according to any one of claims 1 to 7, wherein the battery cell (7) is configured to supply electric energy.

## Patentansprüche

1. Batteriezelle (7), umfassend:
ein Gehäuse (20), das mit einer Elektrolytinjektionsöffnung (21) zum Einfüllen eines Elektrolyten versehen ist;
eine im Gehäuse (20) untergebrachte Elektrodenanordnung (10); und
ein Dichtungselement (30) umfassend, einen Hauptkörperabschnitt (31), einen Übergangsabschnitt (32), der eine Außenseite des Hauptkörperabschnitts (31) umgibt, und einen Verbindungsabschnitt (33), der eine Außenseite des Übergangsabschnitts (32) umgibt, wobei sich der Verbindungsabschnitt (33) auf einer von der Elektrodenanordnung (10) abgewandten Seite des Gehäuses (20) befindet, wobei zumindest ein Teil des Hauptkörperabschnitts (31) aus einer dem Gehäuse (20) zugewandten ersten Oberfläche (33a) des Verbindungsabschnitts (33) herausragt und in der Elektrolytinjektionsöffnung (21) aufgenommen ist, und der Verbindungsabschnitt (33) mit dem Gehäuse (20) verbunden ist, um die Elektrolytinjektionsöffnung (21) abzudichten; wobei
eine dem Gehäuse (20) zugewandte Seite des Übergangsabschnitts (32) mit einer Ausweichnut (34) versehen ist, die Ausweichnut (34) gegenüber der ersten Oberfläche (33a) vertieft ist und den Hauptkörperabschnitt (31) umgibt, und eine Nutwandfläche (34a) der Ausweichnut (34) mit der ersten Oberfläche (33a) und einer Oberfläche des Hauptkörperabschnitts (31) verbunden ist; und eine von der Elektrolytinjektionsöffnung (21) abgewandte Seite des Hauptkörperabschnitts (31) mit einer Aussparung (35) versehen ist,
wobei eine vom Gehäuse (20) abgewandte Oberfläche des Übergangsabschnitts (32) aus einer vom Gehäuse (20) abgewandten Oberfläche des Verbindungsabschnitts (33) herausragt;
wobei der Verbindungsabschnitt (33) mit dem Gehäuse (20) verschweißt ist, um einen ersten Schweißabschnitt (W1) zu bilden, und der erste Schweißabschnitt (W1) eine Außenseite der Elektrolytinjektionsöffnung (21) umgibt;
wobei der Verbindungsabschnitt (33) mit einem verdünnten Bereich (331) versehen ist und der verdünnte Bereich (331) eine Außenseite des ersten Schweißabschnitts (W1) umgibt; und
wobei der verdünnte Bereich (331) dazu dient, mit dem Gehäuse (20) verschweißt zu werden, um mehrere zweite Schweißabschnitte (W2) zu bilden, und die mehreren zweiten Schweißabschnitte (W2) in Umfangsrichtung um den Hauptkörperabschnitt (31) herum beabstandet sind.

2. Batteriezelle (7) nach Anspruch 1, wobei das Gehäuse (20) eine zweite Oberfläche (24) aufweist, die an die erste Oberfläche (33a) angrenzt; und
die Elektrolytinjektionsöffnung (21) einen Führungsabschnitt (211) umfasst, wobei eine Seitenwand (211a) des Führungsabschnitts (211) mit der zweiten Fläche (24) verbunden ist; und sich der Porendurchmesser des Führungsabschnitts (211) in einer Richtung, die von der zweiten Fläche (24) wegführt, allmählich verringert.

3. Batteriezelle (7) nach Anspruch 2, wobei der Hauptkörperabschnitt (31) eine dritte Fläche (31a) aufweist, die der Seitenwand (211a) des Führungsabschnitts (211) zugewandt ist, die dritte Fläche (31a) mit der Nutwandfläche (34a) der Ausweichnut (34) verbunden ist, und die dritte Fläche (31a) parallel zu einer Achse der Elektrolytinjektionsöffnung (21) verläuft.

4. Batteriezelle (7) nach Anspruch 1, wobei der Hauptkörperabschnitt (31) einen Vorsprung (311) und einen Plattenabschnitt (312) umfasst und der Vorsprung (311) eine Außenseite des Plattenabschnitts (312) umgibt und zwischen dem Plattenabschnitt (312) und dem Übergangsabschnitt (32) verbunden ist;
der Vorsprung (311) von der ersten Oberfläche (33a) und dem Plattenabschnitt (312) herausragt, und zumindest ein Teil des Vorsprungs (311) in der Elektrolytinjektionsöffnung (21) aufgenommen ist; und
die Aussparung (35) an einer dem Vorsprung (311) entsprechenden Stelle des Hauptkörperabschnitts (31) angeordnet ist.

5. Batteriezelle (7) nach Anspruch 4, wobei eine Mitte einer Oberfläche des Plattenabschnitts (312), die vom Gehäuse (20) abgewandt ist, mit einer Positionierungsausnehmung (312a) versehen ist.

6. Batteriezelle (7) nach Anspruch 4, wobei eine vom Gehäuse (20) abgewandte Oberfläche des Plattenabschnitts (312) bündig mit einer vom Gehäuse (20) abgewandten Oberfläche des Verbindungsabschnitts (33) ist.

7. Batteriezelle (7) nach Anspruch 1, wobei in einer Dickenrichtung (Z) des Verbindungsabschnitts (33) das Größenverhältnis der Ausweichnut (34) zum Übergangsabschnitt (32) 0,01-0,5 beträgt.

8. Batterie (2), die die Batteriezelle (7) gemäß einem der Ansprüche 1 bis 7 umfasst.

9. Elektrisches Gerät, das die Batteriezelle (7) gemäß einem der Ansprüche 1 bis 7 umfasst, wobei die Batteriezelle (7) so konfiguriert ist, dass sie elektrische Energie liefert.

## Revendications

1. Cellule de batterie (7), comprenant :
un boîtier (20) muni d'un orifice d'injection d'électrolyte (21) destiné à injecter un électrolyte ;
un ensemble d'électrodes (10) logé dans le boîtier (20) ; et
un élément d'étanchéité (30) comprenant une partie de corps principal (31), une partie de transition (32) entourant un côté extérieur de la partie de corps principal (31), et une partie de raccordement (33) entourant un côté extérieur de la partie de transition (32), dans laquelle la partie de raccordement (33) est située sur un côté du boîtier (20) opposé à l'ensemble d'électrodes (10), au moins une partie de la partie de corps principal (31) fait saillie à partir d'une première surface (33a) de la partie de raccordement (33) tournée vers le boîtier (20) et est logée dans l'orifice d'injection d'électrolyte (21), et la partie de raccordement (33) est reliée au boîtier (20) pour obturer l'orifice d'injection d'électrolyte (21) ; dans laquelle
un côté de la partie de transition (32) faisant face au boîtier (20) est muni d'une rainure d'évitement (34), la rainure d'évitement (34) est en retrait par rapport à la première surface (33a) et entoure la partie de corps principal (31), et une surface de paroi (34a) de la rainure d'évitement (34) est reliée à la première surface (33a) et à une surface de la partie de corps principal (31) ; et un côté de la partie de corps principal (31) situé à l'opposé de l'orifice d'injection d'électrolyte (21) est muni d'un évidement (35),
dans lequel une surface de la partie de transition (32) opposée au boîtier (20) fait saillie par rapport à une surface de la partie de raccordement (33) opposée au boîtier (20) ;
dans laquelle la partie de raccordement (33) est soudée au boîtier (20) pour former une première partie soudée (W1), et la première partie soudée (W1) entoure un côté extérieur de l'orifice d'injection d'électrolyte (21) ;
dans laquelle la partie de raccordement (33) est pourvue d'une zone amincie (331), et la zone amincie (331) entoure un côté extérieur de la première partie soudée (W1) ; et
la zone amincie (331) est utilisée pour être soudée au boîtier (20) afin de former plusieurs deuxièmes parties soudées (W2), et lesdites plusieurs deuxièmes parties soudées (W2) sont espacées circonférentiellement autour de la partie de corps principal (31).

2. Cellule de batterie (7) selon la revendication 1, dans laquelle le boîtier (20) comporte une deuxième surface (24) venant en butée contre la première surface (33a) ; et
l'orifice d'injection d'électrolyte (21) comprend une section de guidage (211), une paroi latérale (211a) de la section de guidage (211) est reliée à la deuxième surface (24) ; et le diamètre des pores de la section de guidage (211) diminue progressivement dans une direction s'éloignant de la deuxième surface (24).

3. Cellule de batterie (7) selon la revendication 2, dans laquelle la partie de corps principal (31) comporte une troisième surface (31a) faisant face à la paroi latérale (211a) de la section de guidage (211), la troisième surface (31a) est reliée à la surface de paroi (34a) de la rainure d'évitement (34), et la troisième surface (31a) est parallèle à un axe de l'orifice d'injection d'électrolyte (21).

4. Cellule de batterie (7) selon la revendication 1, dans laquelle la partie de corps principal (31) comprend une saillie (311) et une partie de plaque (312), et la saillie (311) entoure un côté extérieur de la partie de plaque (312) et est reliée entre la partie de plaque (312) et la partie de transition (32) ;
la saillie (311) fait saillie à partir de la première surface (33a) et de la partie en plaque (312), et au moins une partie de la saillie (311) est logée dans l'orifice d'injection d'électrolyte (21) ; et
l'évidement (35) est disposé à un emplacement de la partie de corps principal (31) correspondant à la saillie (311).

5. Cellule de batterie (7) selon la revendication 4, dans laquelle le centre d'une surface de la partie plaque (312) située à l'opposé du boîtier (20) est pourvu d'un évidement de positionnement (312a).

6. Cellule de batterie (7) selon la revendication 4, dans laquelle une surface de la partie de plaque (312) située à l'opposé du boîtier (20) affleure une surface de la partie de raccordement (33) située à l'opposé du boîtier (20).

7. Cellule de batterie (7) selon la revendication 1, dans laquelle, dans une direction d'épaisseur (Z) de la partie de raccordement (33), le rapport de taille entre la rainure d'évitement (34) et la partie de transition (32) est compris entre 0,01 et 0,5.

8. Batterie (2), comprenant la cellule de batterie (7) selon l'une quelconque des revendications 1 à 7.

9. Appareil électrique, comprenant la cellule de batterie (7) selon l'une quelconque des revendications 1 à 7, dans lequel la cellule de batterie (7) est configurée pour fournir de l'énergie électrique.
